# EUROPÄISCHE PATENTSCHRIFT

(11) **EP 1 273 495 B1**
(45) Veröffentlichungstag und Bekanntmachung des Hinweises auf die Patenterteilung: **08.03.2006**
(21) Anmeldenummer: 02013490.4
(22) Anmeldetag: 17.06.2002
(51) Int. Cl.: B60T 7/10, G05G 1/04, G05G 5/12, B22D 17/00

(54) **Handbremshebel für Kraftfahrzeuge und Verfahren zu seiner Herstellung**
Hand brake lever for vehicles and method for its production
Levier de frein à main pour véhicules et procédé pour son fabrication

(30) Priorität: 03.07.2001 DE 10132188
(43) Veröffentlichungstag der Anmeldung: 08.01.2003
(73) Patentinhaber: Volkswagen Aktiengesellschaft, 38436 Wolfsburg (DE)
(72) Erfinder: Hartewieg, Wilfried, 38154 Königslutter (DE)

(56) Entgegenhaltungen:
- EP-A- 1 254 815
- DE-A- 19 521 159
- DE-A- 19 737 738
- DE-A- 19 935 420
- FR-A- 2 704 503

## Beschreibung

Die Erfindung betrifft einen Handbremshebel mit einem vorderen Ende in Form eines Griffelementes, einem Mittelteil zur Aufnahme einer Sperrklinke einer Arretiervorrichtung und einem hinteren Ende in Form einer Zugmittelaufnahme, wobei der Handbremshebel einteilig und aus Druckguss gefertigt ist.

Aus der DE 195 21 159 C2 ist ein schwenkbar an einem Gestell gelagerter Handbremshebel bekannt, dessen Gehäuse zur Erhöhung der Steifigkeit und zur Aufnahme von An- und Einbauteilen, wie Arretier- und Entriegelungseinrichtung, aus zwei miteinander zusammenbaubaren und demgemäß kostenaufwendigen Gehäusehälften besteht. Aus der Praxis ist es bekannt, diese Gehäusehälften aus Druckguss herzustellen. Des Weiteren ist aus der DE 197 37 738 A1 ein in seiner Grundstruktur einteiliger verschwenkbarer Handbremshebel bekannt, der von einem Abschnitt eines vorzugsweise aus Leichtmetall bestehenden Strangpressprofils gebildet wird. Arretier- und Entriegelungseinrichtung sind außerhalb des Profils angeordnet bzw. geführt.

Ferner offenbart EP1254815 einen Handbremshebel für Kraftfahrzeuge mit einem vorderen Ende in Form eines Griffelementes, einem Mittelteil und einem hinteren Ende in Form einer Zugmittelaufnahme, wobei dem Mittelteil eine Sperrklinke einer Arretiereinrichtung zugeordnet ist und wobei der Handbremshebel einteilig und aus Druckguss gefertigt und durch ein wenigstens bereichsweise geschlossenes Profil mit gegenüberliegend angeordneten Taschen und Stegen sowie mit während der Herstellung des Druckgusses in wenigstens einem Arbeitsschritt ohne Hinterschnitte respektive ohne Verwendung von Schiebern erzeugbaren innenliegenden Führungsflächen quer zur Entformungsrichtung der Druckgussform zur Führung von zumindest einem Bedienungselement gebildet ist, das zumindest eine Bedienungselement durch besagte Sperrklinke gebildet ist (Stand der Technik nach Art. 54(3) EPÜ).

Aufgabe der Erfindung ist es, einen einfachen und kostengünstigen einteiligen Handbremshebel aus Druckguss zu schaffen, dessen Arretier- und Entriegelungsmittel innerhalb desselben geführt sind.

Erfindungsgemäß wird die Aufgabe durch einen Handbremshebel für Kraftfahrzeuge mit einem vorderen Ende in Form eines Griffelementes, einem Mittelteil und einem hinteren Ende in Form einer Zugmittelaufnahme gelöst, wobei dem Mittelteil eine Sperrklinke einer Arretiereinrichtung zugeordnet ist und wobei der Handbremshebel einteilig und aus Druckguss gefertigt und durch ein wenigstens bereichsweise geschlossenes Profil mit gegenüberliegend angeordneten Taschen und Stegen sowie mit während der Herstellung des Druckgusses sowie in wenigstens einem Arbeitsschritt erzeugbaren innenliegenden Führungsflächen quer zur Entformungsrichtung der Druckgussform zur Führung von zumindest einem Bedienungselement gebildet ist, das zumindest eine Bedienungselement als besagte Sperrklinke ausgebildet ist und die Sperrklinke vermittels eines Lagerbolzens durch eine Öffnung in einem am Mittelteil angegossenen Lagergehäuse mit beidseitig während des Gusses erzeugten Führungsflächen hindurch schwenkbeweglich gelagert ist. In Weiterbildung der Erfindung ist das Mittelteil mit Taschen und Stegen versehen, welche beidseitig der Struktur und in Grenzen zueinander versetzt angeordnet und/oder in ihren Ausmaßen verschieden ausgebildet sind, wobei die Stege innenliegende Führungsflächen aufweisen, zwischen denen eine Öffnung quer zur Entformungsrichtung der Druckgussform gebildet ist und wobei die Sperrklinke zwischen den Führungsflächen in der Öffnung geführt und vermittels eines Lagerbolzens, der seinerseits in beidseitig in Entformungsrichtung der Druckgussform angeordneten Taschen, die durch Stege begrenzt sind, gelagert ist. Wie die Erfindung weiter vorsieht, kann die Zugmittelaufnahme eine Öffnung mit quer zur Entformungsrichtung der Druckgussform gerichteten innenliegenden Führungsflächen zur beidseitigen Führung eines auf einem Lagerbolzen schwenkbeweglich gelagerten Bedienungselementes in Form eines Zugmittels aufinreisen. Des Weiteren ist das Griffelement des Handbremshebels mit gegenüberliegend wechselnd angeordneten Taschen und Stegen versehen, wobei die Taschen senkrecht zur Längsachse des Griffelementes angeordnete und/oder davon um einen bestimmten Winkel abweichende geschwenkt angeordnete Seitenkonturen aufweisen. Insoweit können zwischen innenliegenden Führungsflächen der Stege des Griffelementes quer zur Entformungsrichtung der Druckgussform eine oder mehrere Öffnungen für ein Bedienelement in Form einer Druckstange geschaffen sein.

Der erfindungsgemäße einteilige Handbremshebel hat im Hinblick auf herkömmliche mehrere Vorteile. Zum einen ist die Möglichkeit gegeben, mit kostengünstigen und einfachen Maßnahmen sowohl Öffnungen in Entformungsrichtung als auch innenliegende Führungsflächen quer zur Entformungsrichtung der Druckgussform ohne Hinterschnitte, respektive ohne Verwendung von Schiebern, zu erzeugen, zum anderen kann ein Handbremshebel mit geringem Gewicht jedoch einem hohen Grad an Bauteilfestigkeit erzielt werden, woraus erhebliche Einsparungen an Arbeitszeit und Material zu verzeichnen sind. Ferner sind eine Verringerung von Montagekosten sowie Einsparungen bezüglich der Druckgussform zu erwarten.

Die Erfindung wird nachstehend anhand der in den Zeichnungen schematisch dargestellten Ausführungsbeispiele näher erläutert. Es zeigen:
- Figur 1: die perspektivische Ansicht eines erfindungsgemäßen Handbremshebels in einer ersten Ausführungsvariante,
- Figur 2: den Schnitt l-l nach Fig. 1,
- Figur 3: den Schnitt ll-ll nach Fig. 1,
- Figur 4: einen Schnitt durch den Handbremshebel nach Fig. 1 im Bereich der Arretiereinrichtung entlang der Linie III-III,
- Figur 5: die Seitenansicht auf den Handbremshebel im Bereich der Zugmittelaufnahme,
- Figur 6: den Schnitt IV-IV nach Fig. 5,
- Figur 7: die Ansicht V nach Fig. 5,
- Figur 8: das Griffelement des Handbremshebels nach Fig. 1 in einer zweiten Ausführungsvariante,
- Figur 9: das Mittelteil des erfindungsgemäßen Handbremshebels in einer weiteren Ausführungsvariante in der Ansicht von rechts gesehen,
- Figur 10: das Mittelteil des erfindungsgemäßen Handbremshebels nach Fig. 9 in der Ansicht von links gesehen.

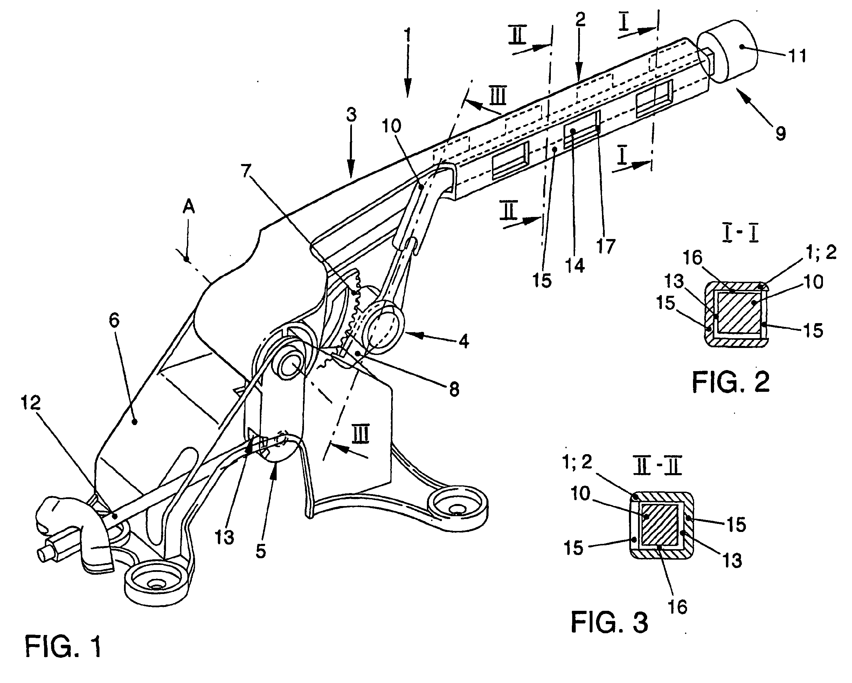

Gem. Fig. 1 ist der Handbremshebel 1 als zweiarmiger Hebel mit einem vorderen Ende in Form eines Griffelementes 2, einem Mittelteil 3, welchem eine Sperrklinke 8 einer an sich bekannten Arretiereinrichtung 4 zugeordnet ist, und einem hinteren Ende in Form einer Zugmittelaufnahme 5 ausgebildet und innerhalb eines Aufnahmegestelles 6 um eine Achse "A" schwenkbeweglich gelagert. Am Aufnahmegestell 6 ist ein Zahnsegment 7 fest angeordnet, in welches die Sperrklinke 8 des Handbremshebels 1 kraft- und formschlüssig eingreift. Das Zahnsegment 7 und die Sperrklinke 8 bilden somit die Arretiereinrichtung 4. Die Sperrklinke 8 steht des Weiteren mit einer Entriegelungseinrichtung 9 in Wirkverbindung, wobei vorliegend das freie Ende der Sperrklinke 8 formschlüssig, jedoch drehbeweglich mit einem langgestreckten Bedienungselement der Entriegelungseinrichtung 9 in Form einer Druckstange 10 mit Betätigungsknopf 11 verbunden ist. Die Druckstange 10 ist ihrerseits in dem als Griffelement 2 des Handbremshebels 1 bezeichneten Hebelarm axial beweglich geführt.

Bekanntermaßen können die Entriegelungseinrichtung 9 und/oder die Sperrklinke 8 federbelastet ausgeführt sein (nicht näher dargestellt).

Der zweite Hebelarm umfasst seinerseits die Zugmittelaufnahme 5 und stellt somit über ein Zugmittel 12, vorliegend eine Zugstange, die Wirkverbindung zwischen dem Handbremshebel 1 und der nicht näher dargestellten Radbremse her.

Aufgabengemäß ist der Handbremshebel 1 aus Druckguss sowie einteilig ausgebildet, wobei bekanntermaßen Metallschmelze, beispielsweise aus einer Aluminium- oder Magnesiumlegierung, unter hohem Druck in eine an sich bekannte und nicht näher dargestellte zwei- oder mehrteilige Druckgussform gespritzt wird. Durch dieses Verfahren können dünnwandige und kompliziert geformte Werkstücke in hohen Stückzahlen hergestellt werden. Die Gussstücke weisen eine qualitativ hochwertige und saubere Oberfläche auf, die eine Nachbearbeitung in überwiegenden Fällen entbehrlich macht.

Der Handbremshebel 1 weist während der Herstellung des Druckgusses sowie in wenigstens einem Arbeitsschritt ohne Hinterschnitte, respektive ohne Verwendung von an sich üblichen Schiebern geschaffene Führungsflächen 13 quer zur Entformungsrichtung der Druckgussform auf. Diese Führungsflächen 13 werden durch Formwerkzeuge der Druckgussform gebildet, deren Wrkebenen abschnittsweise ineinanderdringen.

Demgemäß besteht der Handbremshebel 1 aus einem einteiligen wenigstens bereichsweise geschlossenen Profil, mit gegenüberliegend angeordneten Taschen 14 und Stegen 15, wobei die gegenüberüegenden Taschen 14 und Stege 15 so zueinander angeordnet sind, dass zwischen den erfindungsgemäß innenliegenden Führungsflächen 13 der Stege 15 und innerhalb des Handbremshebels 1 sowie quer zur Entformungsrichtung der Druckgussform ein oder mehrere Öffnungen 16 für ein oder mehrere langgestreckte Bedienungselemente geschaffen werden.

Vorliegend weist das Griffelement 2 des Handbremshebels 1 gegenüberliegende wechselnd angeordnete Taschen 14 sowie Stege 15 mit innenliegenden Führungsflächen 13 auf, zwischen denen die Druckstange 10 der Entriegelungseinrichtung 9 in der gebildeten Öffnung 16 axial beweglich geführt ist (Fig. 1 bis 3). Die Seitenkonturen 17 der Taschen 14 sind senkrecht zur Längsachse des Griffelementes 2 angeordnet (Fig. 1).
Es bietet sich an, die Taschen 14 und Stege 15 mittels nicht näher dargestellter kammartig ineinandergreifender Formwerkzeuge der Druckgussform zu erzeugen.

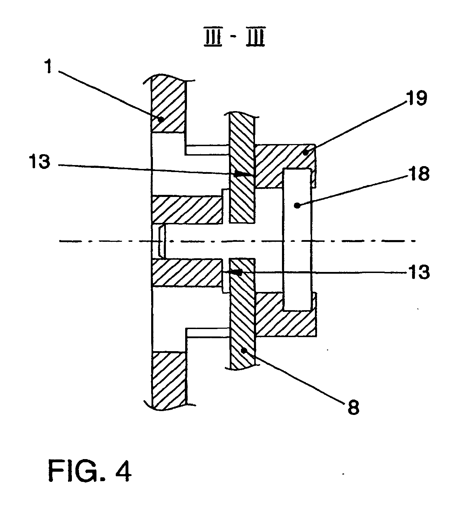

Die Fig. 4 zeigt ihrerseits einen Schnitt durch das Mittelteil des Handbremshebel 1 nach Fig. 1 im Bereich der Arretiereinrichtung 4 entlang der Linie III-III. Danach ist die Sperrklinke 8 erfindungsgemäß mit einem Lagerbolzen 18 durch die Öffnung 16 in einem angegossenen Lagergehäuse 19 hindurch schwenkbeweglich gelagert und mittels beidseitig während des Gusses erzeugter Führungsflächen 13 geführt. Auch diese Maßnahme macht die einfache und kostengünstige Herstellung des Handbremshebels 1 als einteiliges Druckgussteil deutlich.

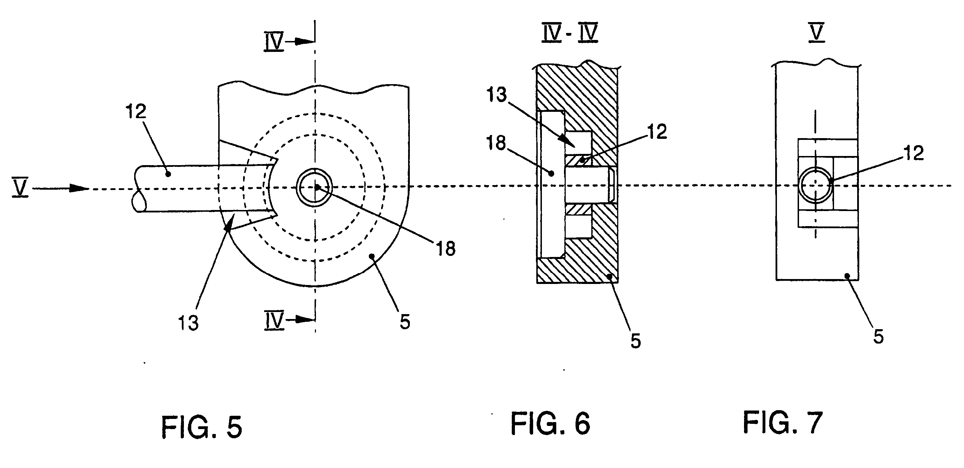

Weiterhin wird in den Fig. 5 bis 7 der zweite Hebelarm des Handbremshebels 1 im Bereich der Zugmittelaufnahme 5 näher gezeigt. Sehr gut sind in der Zusammenschau der Fig. 5 und 6 die innenliegenden Führungsflächen 13 quer zur Entformungsrichtung der Druckgussform ersichtlich, die ebenfalls ohne jegliche Hinterschnitte, respektive ohne Verwendung von an sich üblichen Schiebern erzeugbar sind. Innerhalb der zwischen den Führungsflächen 13 gebildeten Öffnung 16 ist das Zugmittel 12, vorliegend eine Zugstange, geführt und auf einem Lagerbolzen 18 in Grenzen schwenkbeweglich gelagert.

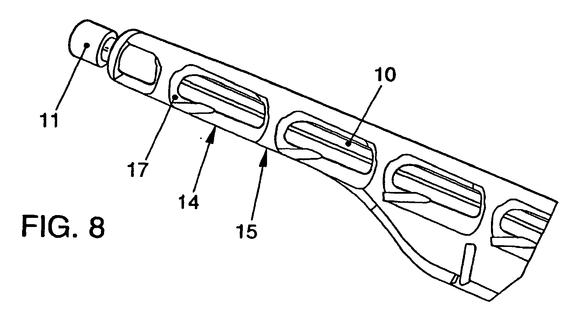

Die Ausführungsform gem. Fig. 8 unterscheidet sich zur vorbeschriebenen im Wesentlichen dadurch, dass die Taschen 14 des Griffelementes 2 um einen bestimmten Winkel zur Längsachse desselben abweichende geschwenkt angeordnete Seitenkonturen 17 aufweisen. Mit dieser Maßnahme kann zum einen einer besonderen Formgestaltung des Griffelementes 2 Rechnung getragen werden, zum anderen besteht die Möglichkeit auch auf die Festigkeit der Struktur vorteilhaft Einfluss nehmen zu können.

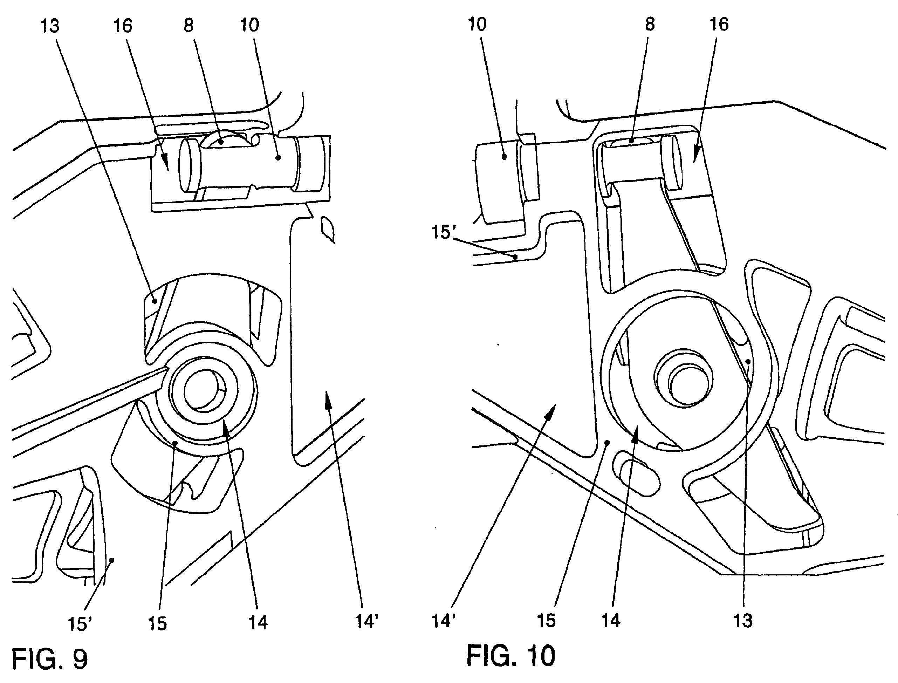

Abschließend wir durch die Fig. 9 und 10 das Mittelteil des erfindungsgemäßen Handbremshebels 1 in einer weiteren Ausführungsvariante gezeigt. Danach ist das Mittelteil, in welchem insbesondere die Sperrklinke 8 der Arretiereinrichtung 4 aufgenommen und gelagert ist, ebenfalls mit Taschen 14 und Stegen 15 versehen, wobei dieselben beidseitig der Struktur und in Grenzen zueinander versetzt angeordnet bzw. in ihren Ausmaßen verschieden sind. Die Stege 15 ihrerseits weisen erfindungsgemäß ebenfalls Führungsflächen 13 auf, zwischen denen die Öffnung 16 für die Sperrklinke 8 quer zur Entformungsrichtung der Druckgussform gebildet ist. Wie weiterhin ersichtlich, wird die Sperrklinke 8 zwischen den innenliegenden Führungsflächen 13 in der quer zur Entformungsrichtung der Druckgussform angeordneten Öffnung 16 geführt und mittels eines nicht näher dargestellten Lagerbolzens 18 gehalten, der seinerseits in beidseitig in Entformungsrichtung der Druckgussform angeordneten kreisrunden Taschen 14, die durch Stege 15 begrenzt sind, gelagert ist. Des Weiteren ist darauf hinzuweisen und wird insbesondere in den Fig. 9 und 10 näher gezeigt, dass nicht nur innenliegende Führungsflächen 13, sondern auch nach freiem Ermessen eine beliebige Anzahl von Taschen 14' und Stegen 15' in Entformungsrichtung geschaffen werden können, die im Wesentlichen zur Materialeinsparung und Erhöhung der Festigkeit der Grundstruktur dienen.

## Patentansprüche

1. Handbremshebel (1) für Kraftfahrzeuge mit einem vorderen Ende in Form eines Griffelementes (2), einem Mittelteil (3) und einem hinteren Ende in Form einer Zugmittelaufnahme (5), wobei dem Mittelteil (3) eine Sperrklinke (8) einer Arretiereinrichtung (4) zugeordnet ist und wobei der Handbremshebel (1) einteilig und aus Druckguss gefertigt und durch ein wenigstens bereichsweise geschlossenes Profil mit gegenüberliegend angeordneten Taschen (14) und Stegen (15) sowie mit während der Herstellung des Druckgusses in wenigstens einem Arbeitsschritt ohne Hinterschnitte respektive ohne Verwendung von Schiebern erzeugbaren innenliegenden Führungsflächen (13) quer zur Entformungsrichtung der Druckgussform zur Führung von zumindest einem Bedienungselement gebildet ist, das zumindest eine Bedienungselement durch besagte Sperrklinke (8) gebildet ist und die Sperrklinke (8) vermittels eines Lagerbolzens (18) durch eine Öffnung (16) in einem am Mittelteil (3) angegossenen Lagergehäuse (19) mit beidseitig während des Gusses erzeugten Führungsflächen (13) hindurch schwenkbeweglich gelagert ist.

2. Handbremshebel (1) nach Anspruch 1, **dadurch gekennzeichnet, dass** das Mittelteil (3) mit Taschen (14) und Stegen (15) versehen ist, welche beidseitig der Struktur und in Grenzen zueinander versetzt angeordnet und/oder in ihren Ausmaßen verschieden ausgebildet sind, wobei die Stege (15) innenliegende Führungsflächen (13) aufweisen, zwischen denen eine Öffnung (16) quer zur Entformungsrichtung der Druckgussform gebildet ist und wobei die Sperrklinke (8) zwischen den Führungsflächen (13) in der Öffnung (16) geführt und vermittels eines Lagerbolzens (18), der seinerseits in beidseitig in Entformungsrichtung der Druckgussform angeordneten Taschen (14), die durch Stege (15) begrenzt sind, gelagert ist.

3. Handbremshebel (1) nach einem der Ansprüche 1 und 2, **dadurch gekennzeichnet, dass** die Zugmittelaufnahme (5) eine Öffnung (16) mit quer zur Entformungsrichtung der Druckgussform gerichteten innenliegenden Führungsflächen (13) zur beidseitigen Führung eines auf einem Lagerbolzen (18) schwenkbeweglich gelagerten Bedienungselementes in Form eines Zugmittels (12) aufweist.

4. Handbremshebel nach einem der Ansprüche 1 bis 3, **dadurch gekennzeichnet, dass** das Griffelement (2) des Handbremshebels (1) mit gegenüberliegend wechselnd angeordneten Taschen (14) und Stegen (15) versehen ist und die Taschen (14) senkrecht zur Längsachse des Griffelementes (2) angeordnete und/oder davon um einen bestimmten Winkel abweichende geschwenkt angeordnete Seitenkonturen (17) aufweisen.

5. Handbremshebel nach Anspruch 4, **dadurch gekennzeichnet, dass** zwischen innenliegenden Führungsflächen (13) der Stege (15) quer zur Entformungsrichtung der Druckgussform eine oder mehrere Öffnungen (16) für ein Bedienungselement in Form einer Druckstange (10) geschaffen sind.

## Claims

1. Handbrake lever (1) for motor vehicles with a front end in the form of a grip element (2), a central part (3), and a rear end in the form of a receptacle, (5) for pulling means, the central part (3) being assigned a pawl (8) of an arresting device (4) and the handbrake lever (1) being produced in one piece and from die-casting and being formed by a profile which is closed at least in certain regions, the profile having oppositely arranged pockets (14) and webs (15) and also having, transversely with respect to the demoulding direction of the die-casting mould, internal guide faces (13) for guiding at least one operating element, it being possible to produce the guide faces during the production of the die-casting in at least one operation without undercuts or without the use of slides, the at least one operating element being formed by the said pawl (8), and the pawl (8) being mounted by means of a bearing bolt (18) so as to be swivelable through an opening (16) in a bearing housing (19) which is integrally cast with the central part (3) and has guide faces (13) produced on both sides during the casting operation.

2. Handbrake lever (1) according to Claim 1, **characterized in that** the central part (3) is provided with pockets (14) and webs (15) which are arranged offset on both sides of the structure and within limits relative to one another and/or are designed differently in their dimensions, the webs (15) having internal guide faces (13) between which an opening (16) is formed transversely with respect to the .demoulding direction of the die-casting mould, and the pawl (8) being guided between the guide faces (13) in the opening (16) and being held by means of a bearing bolt (18) which, in turn, is mounted in pockets (14) which are arranged on both sides in the demoulding direction of the die-casting mould and are bounded by webs (15).

3. Handbrake lever (1) according to either of Claims 1 and 2, **characterized in that** the receptacle (5) for pulling means has an opening (16) with internal guide faces (13) which are directed transversely with respect to the demoulding direction of the die-casting mould and are intended for guiding on both sides an operating element in the form of a pulling means (12) which is swivelably mounted on a bearing bolt (18).

4. Handbrake lever according to one of Claims 1 to 3, **characterized in that** the grip element (2) of the handbrake lever (1) is provided with pockets (14) and webs (15) arranged oppositely in alternating fashion and the pockets (14) have lateral contours (17) arranged perpendicularly to the longitudinal axis of the grip element (2) and/or arranged in a pivoted position diverging by a certain angle therefrom.

5. Handbrake lever according to Claim 4, **characterized in that** one or more openings (16) for an operating element in the form of a plunger (10) are created between internal guide faces (13) of the webs (15) transversely with respect to the demoulding direction of the die-casting mould.

## Revendications

1. Levier de frein à main (1) pour véhicules automobiles comprenant une extrémité avant sous forme d'élément de préhension (2), une partie centrale (3) et une extrémité arrière sous forme de logement pour moyens de traction (5), un cliquet d'arrêt (8) d'un dispositif de blocage (4) étant associé à la partie centrale (3) et le levier de frein à main (1) étant fabriqué d'une seule pièce par coulée sous pression et étant formé par un profilé fermé au moins en partie avec des cavités. (14) et des parties pleines (15) disposées en regard ainsi qu'avec des surfaces, de guidage (13) internes, pouvant être produites pendant la fabrication par coulée sous pression en au moins une passe de travail sans contre-dépouilles, respectivement sans utilisation de côulisseaux, transversalement à la direction de démoulage du moule de coulée sous pression, pour le guidage d'au moins un élément de commande, l'au moins un élément de commande étant formé par ledit cliquet d'arrêt (8) et le cliquet d'arrêt (8) étant monté de manière mobile pivotante par l'intermédiaire d'un boulon de palier (18) à travers une ouverture (16) dans un logement de palier (19) moulé sur la partie centrale (3) avec des surfaces de guidage (13) produites des deux côtés pendant la coulée.

2. Levier de frein à main (1) selon la revendication 1, **caractérisé en ce que** la partie centrale (3) est pourvue de cavités (14) et de parties pleines (15) qui sont disposées de manière décalée et limitée les unes par rapport aux autres des deux côtés de la structure et/ou sont réalisées avec des dimensions différentes, les parties pleines (15) présentant des surfaces de guidage internes (13), entre lesquelles une ouverture (16) est formée transversalement à la direction de démoulage du moule de coulée sous pression, et le cliquet d'arrêt (8) étant guidé entre les surfaces de guidage (13) dans l'ouverture (16) et étant maintenu en place par l'intermédiaire d'un boulon de palier (18), qui est pour sa part monté dans des cavités (14) disposées de part et d'autre dans la direction de démoulage.du moule de coulée sous pression, qui sont limitées par des parties pleines (15).

3. Levier de frein à main (1) selon l'une quelconque des revendications 1 et 2, **caractérisé en ce que** le logement pour moyens de traction (5) présente une ouverture (16) avec des surfaces de guidage (13) internes orientées transversalement à la direction de démoulage du moule de coulée sous pression pour le guidage bilatéral d'un élément de commande en forme de moyen de traction (12), monté de manière mobile pivotante sur un boulon de palier (18).

4. Levier de frein à main selon l'une quelconque des revendications 1 à 3, **caractérisé en ce que** l'élément de préhension (2) du levier de frein à main (1) est pourvu de cavités (14) et de parties pleines (15) disposées en alternance et en regard, et les cavités (14) présentent des contours latéraux (17) disposés perpendiculairement à l'axe longitudinal de l'élément de préhension (2) et/ou pivotés suivant un angle déterminé s'écartant de celui-ci.

5. Levier de frein à main selon la revendication 4, **caractérisé en ce qu'**une ou plusieurs ouvertures (16) pour un élément de commande en forme de tige de pression (10) sont créés entre les surfaces de guidage internes (13) des parties pleines (15) transversalement à la direction de démoulage du moule de coulée sous pression.
